# EUROPÄISCHE PATENTANMELDUNG

(11) **EP 1 174 689 A2**
(43) Veröffentlichungstag der Anmeldung: **23.01.2002**
(21) Anmeldenummer: 01115263.4
(22) Anmeldetag: 23.06.2001
(51) Int. Cl.: G01F 1/66

(54) **Durchflussmesser**

(30) Priorität: 20.07.2000 DE 10035241
(71) Anmelder: Hydrometer GmbH, 91522 Ansbach (DE)
(72) Erfinder: Sonnenberg, Hans-Michael, 90616 Neuhof (DE)
(74) Vertreter: Stippl, Hubert, Dipl.-Ing.

(57) **Zusammenfassung**

Die Erfindung betrifft einen Durchflußmesser für flüssige oder gasförmige Medien mit einer durchströmten Meßkammer, mindestens einem Einlaß- und mindestens einem Auslaßkanal sowie mit mindestens einem Ultraschallwandler zum Aussenden bzw. Empfangen von Ultraschallsignalen , die die Strömung in der Meßkammer durchsetzen, und einer Auswerteeinrichtung für die Meßsignale der Ultraschallwandler, wobei sich durch entsprechende Anordnung zumindest des Einlaßkanals in der Meßkammer ein Strömungswirbel des zu messenden Mediums ausbildet und mindestens ein Reflektor an der Kammerwand vorgesehen ist, der das Ultraschallsignal in Richtung oder gegen die Richtung des Strömungswirbels durch die Meßkamme r leitet.

## Beschreibung

Die Erfindung betrifft einen Durchflußmesser für flüssige oder gasförmige Medien mit den weiteren Merkmalen des Oberbegriffes des Patentanspruchs 1.

Durchflußmeßgeräte mit Sende-/Empfangseinrichtungen für Ultraschallmessungen haben generell den Nachteil, daß die Schallausbreitungsgeschwindigkeit im Verhältnis zur Strömungsgeschwindigkeit des zu messenden Mediums sehr hoch ist. Dies hat zur Folge, daß bei geringen Volumenströmen entweder sehr lange Meßstrecken benötigt werden oder in sehr geringen Zeitunterschieden im Picosekundenbereich gemessen werden muß.

Eine weitere Schwierigkeit besteht bei der Messung sehr großer Durchflüsse. Um den Druckabfall im Durchflußmeßgerät dabei möglichst gering zu halten, benötigen solche Meßgeräte sehr große Querschnitte. Da aber die Schallkeule eines Ultraschalldurchflußmessers nur mit hohem technischen Aufwand an den Durchmesser des Leitungsquerschnittes angepaßt werden kann, wird bei bisherigen Geräten nur ein Teil der Strömung erfaßt. Dies hat jedoch den Nachteil, daß Turbulenzen und Störungen des Strömungsprofils nicht voll erfaßt werden können.

In DE 196 05 164 C 2 ist ein Ultraschall-Strömungsmeßgerät für flüssige oder gasförmige Medien bekannt, dessen Meßkammer einen kreisringförmigen Meßkanal aufweist, in welchem durch entsprechende Gestaltung der Zu- und Abläufe eine rotierend umlaufende Bewegung des zu messenden Mediums stattfindet. Dabei ist die Anordnung so getroffen, daß eine mehrfache Durchschallung des Meßkanals erfolgt. Dieser bekannte Meßaufbau hat jedoch den Nachteil, daß die Schallführung des Ultraschallsignals sowohl über die Ringaußenwand als auch über die Ringinnenwand erfolgt. Der Ultraschallstrahl wird dabei sehr häufig reflektiert. Es können sich viele Schallmoden ausbilden, die in Interferenz treten, so daß ab etwa einem Viertel der Ringstrecke keine gleichmäßige Schallwelle mehr vorhanden ist. Mit der Temperatur verändern sich diese Interferenzerscheinungen, so daß Nichtlinearitäten auftreten, die nur mit hohem Aufwand zu linearisieren sind.

Der Erfindung liegt die Aufgabe zugrunde, einen Durchflußmesser den Merkmalen des Oberbegriffes des Patentanspruchs 1 derart auszubilden, daß eine Meßstrecke für Ultraschallsignale geschaffen wird, bei der der Strömungsvektor möglichst lange parallel zum Schallvektor verläuft, die Querschnittsfläche des Strömungskanals möglichst vollständig von der Ultraschallwelle erfaßt wird und der Druckabfall in der Meßstrecke möglichst kleingehalten wird bei gleichzeitig einfachem Aufbau des Durchflußmessers.

Diese Aufgabe wird durch die Lehre des Patentanspruchs 1 gelöst. Vorteilhafte Weiterbildungen des Durchflußmessers ergeben sich aus den Unteransprüchen 2 - 23.

Bei dem erfindungsgemäßen Durchflußmesser ist zumindest der Einlaßkanal derart ausgebildet, daß in der Meßkammer ein Strömungswirbel des zu messenden Mediums ausgebildet wird. An der Kammerwand des Durchflußmessers ist mindestens ein Reflektor vorgesehen, der das Ultraschallsignal in Richtung oder gegen die Richtung des Strömungswirbels durch die Meßkammer leitet. Die Zahl der Reflektoren ist abhängig vom Durchmesser des Ultraschallstrahls und der Größe der Meßkammer. Die erfindungsgemäße Konstruktion ermöglicht lange Wegstrecken, bei denen der Strömungsvektor parallel zum Schallvektor verläuft. Gleichzeitig ist eine kompakte Bauweise möglich. Das Schallsignal kann jeweils bis zu den Reflektoren frei laufen, wobei keine unvorteilhafte Schallausbreitung erfolgt. Ein weiterer Vorteil der vorliegenden Konstruktion besteht darin, daß die Gehäuse bisheriger Zähler benutzt werden können, wobei nur ein anderer Einsatz notwendig ist. Das erfindungsgemäße Konzept kann für alle Nenngrößen von Durchflußmessem verwendet werden.

Vorteilhafterweise kann die Meßkammer zylinderfömig ausgebildet sein, so daß Sekundärwirbel und Strömungsturbulenzen im Hauptströmungswirbel möglichst gering gehalten werden. Durch die Kreis- bzw. Zylinderform kann dies gut erreicht werden.

Das Ultraschallsignal kann mehrfach durch entsprechende Anordnung der Reflektoren im Kreis durch den Strömungswirbel geleitet werden, womit beliebig lange Meßstrecken erzeugt werden können.

Die Schallführung kann zweckmäßigerweise so ausgestaltet sein, daß das Ultraschallsignal das Zentrum der Meßkammer nicht durchsetzt. Sind Gasblasen im flüssigen Medium vorhanden, werden diese in das Zentrum der Meßkammer gezogen, so daß diese Schallführung den Vorteil hat, daß im beschallten Medium keine oder nur ein geringer Anteil von Gasblasen existieren, die das Ultraschallsignal dämpfen und damit verfälschen könnten. Die Bereiche der Meßkammer, in denen die höchsten Wirbelgeschwindigkeiten der Strömung auftreten, werden demnach bei der Schallführung besonders berücksichtigt.

Da der Kernbereich der Meßkammer für die Messung nicht relevant ist, kann dieser Bereich für die Ein- und Auskopplung des Ultraschallsignals genutzt werden. Dementsprechend können die Ultraschallwandler im Zentrum der Meßkammer angeordnet sein, so daß dieser Bereich gut genutzt ist. Auch der kompakte Aufbau des Durchflußmesser wird durch diese Anordnung der Ultraschallwandler unterstützt.

Sind Einlaß- und/oder Auslaßkanal an die Meßkammer tangential angeordnet, kann sich der Strömungswirbel in der zylindrischen Meßkammer optimal ohne wesentliche Strömungsverluste oder -störungen ausbilden.

Weist der Einlaßkanal und/oder Auslaßkanal in etwa den gleichen Durchmesser wie die daran angrenzenden Rohre auf, kann ein Druckabfall in der Meßstrecke gering gehalten werden oder gar nicht auftreten, so daß die Meßdynamik des Durchflußmessers nicht eingeschränkt wird.

Zur Leitung der Strömung des Mediums können Leitbleche vorgesehen sein, durch welche sich der gewünschte Strömungswirbel ausbildet. Die Leitbleche können im Anschluß an den Einlaßkanal angeordnet sein und sind besonders dann notwendig, wenn der Einlaßkanal in axialer Richtung zur Hauptströmungsrichtung oder senkrecht an die Meßkammer angeordnet ist. Ohne Leitbleche würde sich sonst gegebenenfalls nicht der für die Messung notwendige Strömungswirbel ausbilden.

Ebenso ist es möglich, daß die Leitbleche vor dem Auslaßkanal angeordnet sind und die gesamte Ausbildung des Strömungswirbels entsprechend beeinflußt wird.

Die Leitbleche können senkrecht zur Wirbelausrichtung angeordnet sein. Ist der Einlaßkanal z. B. in zentraler Lage unterhalb der Meßkammer vorgesehen, dann können die Leitbleche zur Längsachse der Meßkammer geneigt sein, damit sich der Strömungswirbel ausbildet. Mit der Neigung der Leitbleche kann die Stärke des sich ausbildenden Strömungswirbels variiert werden, so daß mit dieser Anordnung sehr große Durchflüsse erreicht werden können.

Im Zentrum des Strömungswirbels kann ein Zylinder vorgesehen sein, der aus ultraschalldämpfendem Material besteht. Damit können parasitäre Schallanteile im Kernbereich der Meßkammer, welcher vom Meßschall nicht erfaßt wird, abgefangen werden. Die Ausfüllung des Kernbereichs bewirkt außerdem eine Stabilisierung der Wirbelausbildung, was zur Meßstabilität beiträgt.

Die Reflektoren können vorzugsweise so angeordnet sein, daß sie das Ultraschallsignal senkrecht zur Längsachse der Meßkammer leiten. Auf diese Weise kann die Ultraschallwelle den Strömungswirbel möglichst vollständig erfassen, wobei der Schallvektor parallel zum Strömungsvektor verläuft.

Mit besonderem Vorteil kann die Meßkammer symmetrisch aufgebaut sein, so daß ein gleichmäßiger Strömungsverlauf des Wirbels sowie der Schallführung erzeugt wird.

Insbesondere können die Reflektoren und/oder die Einlaßkanäle symmetrisch angeordnet sein, wobei der Auslaßkanal in zentraler Lage vorgesehen sein kann. Vorzugsweise kann jedem reflektierten Teilstrahl des Ultraschallsignals mindestens ein Einlaßkanal für das zu messende Medium zugeordnet sein. Die Anzahl der Einlaßkanäle ist zweckmäßigerweise gleich oder ein ganzes Vielfaches der Anzahl der Teilstrahlen der Ultraschallsignals. Die jeweiligen Einlaßkanäle können dabei in gleichem Abstand und Winkel zu dem jeweiligen Teilstrahl des Ultraschallsignals bzw. dem jeweiligen Reflektor angeordnet sein. Damit kann vermieden werden, daß durch ungleichmäßige Aufteilung der Strömung in den Einlaßkanälen das Schallsignal verschieden stark moduliert wird und somit Meßfehler verursachen würde.

Der günstigste Ort für die Anordnung der Einlaßkanäle ist in der Nähe des jeweiligen Reflektors, da an dieser Stelle die hohe Impulsgeschwindigkeit des Kanals genutzt werden kann und diese möglichst lange im Schallstrahl zum Meßeffekt beitragen kann. Da bei laminarer Schichtströmung, die im unteren Bereich der Meßdynamik eines Ultraschallzählers besteht, der Strömungsimpuls relativ lange aufrecht erhalten bleibt, kann durch diese Anordnung die Meßdynamik verbessert werden.

Die Erfindung ist anhand von vorteilhaften Aufführungsbeispielen in den Zeichnungsfiguren näher erläutert. Diese zeigen:
- Fig. 1: eine Draufsicht auf einen erfindungsgemäßen Durchflußmesser;
- Fig. 2: eine Draufsicht auf eine Meßkammer eines Durchflußmessers mit einer anderen Möglichkeit der Schallführung;
- Fig. 3: eine Seitenansicht einer alternativen Ausführungsform eines Durchflußmessers;
- Fig. 4: eine Draufsicht auf eine weitere Variante eines Durchflußmessers sowie
- Fig. 5: ein Strömungsprofil in der Meßkammer üb er den Radius.

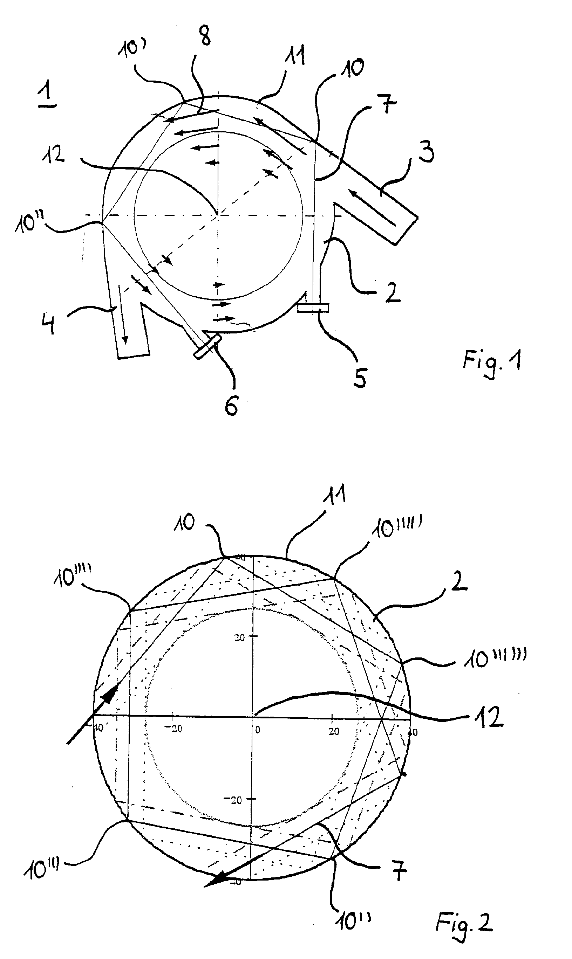

Bezugsziffer 1 bezeichnet den Durchflußmesser in seiner Gesamtheit. Der Durchflußmesser 1 dient der Mengenmessung des hindurchströmenden, flüssigen oder gasförmigen Mediums. Er besteht aus einer Meßkammer 2, durch welche das zu messende Medium strömt, sowie einem Einlaßkanal 3 und einem Auslaßkanal 4 für das Medium. Die Ultraschallwandler 5, 6 dienen dem Aussenden bzw. Empfangen von Ultraschallsignalen 7, die die Strömung 8 in der Meßkammer 2 durchsetzen (vgl. Fig. 1). Eine Auswerteeinrichtung für die Meßsignale der Ultraschallwandler 5, 6 ist in den Zeichnungsfiguren nicht dargestellt. Der erfindungsgemäße Durchflußmesser 1 zeichnet sich durch seine spezielle Anordnung des Einlaßkanals 3 in der Meßkammer 2 aus, durch welche ein Strömungswirbel 9 des zu messenden Mediums ausgebildet wird. Reflektoren 10, 10', 10" an der Kammerwand 11 dienen der Leitung des Ultraschallsignals 7 in Richtung oder gegen die Richtung des Strömungswirbels 9 durch die Meßkammer 2. Die Schallweiterleitung erfolgt demnach nur über eine bestimmte Anzahl von Reflektoren, so daß eine unerwünschte Schallausbreitung ausbleibt. Das Ultraschallsignal 7 wird dabei so durch die Meßkammer 2 geleitet, daß es die Stärke des Strömungswirbels 9 mißt. Wie in Fig. 2 dargestellt, kann das Schallsignal mehrfach (in Fig. 2 zweifach) durch den Strömungswirbel 9 geleitet werden, womit eine entsprechende lange Meßstrecke erzeugt wird. Der Durchflußmesser 1 zeichnet sich außerdem durch seinen einfachen und kompakten Aufbau aus.

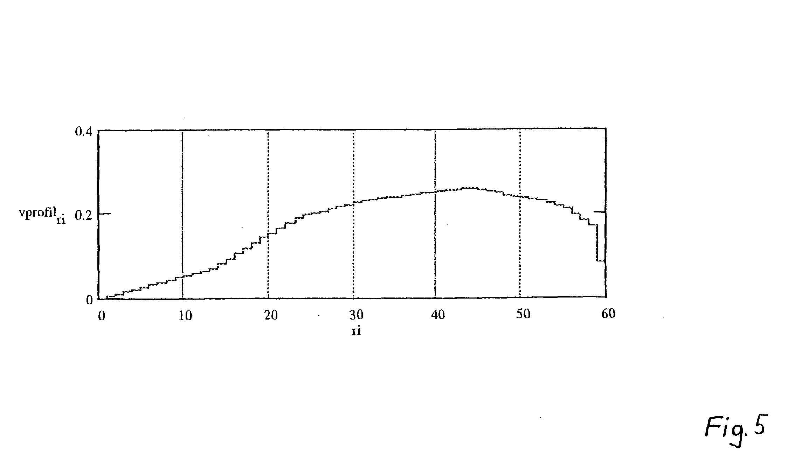

Die Meßkammer 2 ist bei den verschiedenen Ausführungsvarianten (Figuren 1 - 4) zylinderförmig ausgebildet, so daß sich der Strömungswirbel optimal bei möglichst wenigen Sekundärwirbeln oder Strömungsturbulenzen ausbilden kann. Das Ultraschallsignal 7 durchsetzt nicht das Zentrum 12 der Meßkammer 2. Dadurch kann das Ultraschallsignal nicht durch Gasblasen, die bei einem flüssigen Medium in das Zentrum 12 der Meßkammer 2 gezogen werden, gedämpft bzw. verfälscht werden. Ferner wird durch diejenigen Bereiche der Meßkammer 2, in denen die höchsten Wirbelgeschwindigkeiten der Strömung 8 auftreten, die Ultraschallsignale geleitet. In Fig. 5 ist ein Strömungsprofil über den Radius der Meßkammer dargestellt, in welchem die hohen Strömungsgeschwindigkeiten im Randbereich im Vergleich zum Zentrum 12 zu erkennen sind.

Dagegen kann das Zentrum 12 der Meßkammer 2 zur Ein- und Auskopplung des Ultraschallsignals 7 dienen (siehe Fig. 4). Dazu sind die Ultraschallwandler 5, 6 im Zentrum 12 der Meßkammer 2 angeordnet.

Um die gewünschte Ausbildung des Strömungswirbels 9 zu bewirken, sind bei der Konstruktion gemäß Fig. 1 die Einlaß- und Auslaßkanäle 3, 4 an die Meßkammer 2 tangential angeordnet. Um den Druckabfall im Durchflußmesser 1 möglichst gering zu halten, sind die Durchmesser der Ein- und Auslaßkanäle 3, 4 in etwa gleich dem Durchmesser der daran angrenzenden Rohre.

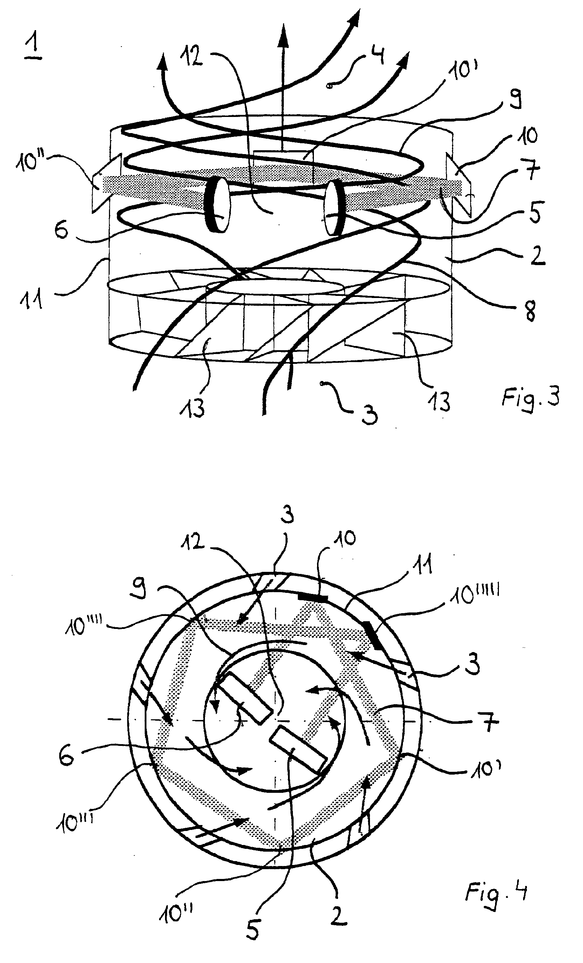

Der Durchflußmesser 1 in Fig. 3 weist im Anschluß an den Einlaßkanal 3 Leitbleche 13 auf, die zur Leitung der Strömung 8 dienen und die Ausbildung des Strömungswirbels 9 bewirken. Die Leitbleche 13 können auch zusätzlich vor dem Auslaßkanal 4 angeordnet sein. Die Leitbleche 13 sind senkrecht zur Wirbelausrichtung angeordnet. Sie sind außerdem zur Längsachse der Meßkammer 2 geneigt. Mit der Neigung der Leitbleche 13 kann die Stärke des sich ausbildenden Strömungswirbels 9 verändert werden, so daß mit dieser Anordnung auch sehr große Durchflüsse des zu messenden Mediums erreicht werden können.

Da das Zentrum 12 des Strömungswirbels 9 nicht von den Ultraschallsignalen 7 durchsetzt wird, kann an dieser Stelle ein Zylinder (in den Zeichnungsfiguren nicht dargestellt) vorgesehen sein. Dieser Zylinder hat zusätzlich die Wirkung, die Wirbelausbildung zu stabilisieren, was zur Meßstabilität beiträgt. Bei leicht ungleichmäßiger Einströmung des Mediums in die Meßkammer 2 würde sich nämlich das Wirbelzentrum verschieben. Dieser Zylinder kann aus ultraschalldämpfendem Material bestehen, so daß parasitäre Schallanteile abgefangen werden.

Die Reflektoren 10, 10', 10" leiten das Ultraschallsignal 7 senkrecht zur Längsachse der Meßkammer 2 (siehe Fig. 3), womit die Strömung 8 möglichst vollständig erfaßt wird.

Die Meßkammern 2 sind vorzugsweise symmetrisch aufgebaut, wobei insbesondere die Reflektoren 10, 10', 10" und die Einlaßkanäle 3 symmetrisch angeordnet sind (wie in Fig. 4 dargestellt). Den Teilstrahlen des Ultraschallsignals 7 ist dabei jeweils ein Einlaßkanal 3 zugeordnet. Damit wird eine gleichmäßige Aufteilung der Strömung 8 des Mediums bewirkt und das durchsetzende Schallsignal wird gleichmäßig moduliert. Es können auch mehrere Einlaßkanäle 3 vorgesehen sein, die jedoch in ihrer Anzahl einem Vielfachen der Anzahl der Teilstrahlen des Ultraschallsignals entsprechen, um eine gleichmäßige Strömungsausbildung und Ultrabeschallung zu gewährleisten. Die Einlaßkanäle 3 sind im gleichen Abstand und Winkel zu den Teilstrahlen des Ultraschallsignals 7 angeordnet und befinden sich vorzugsweise in der Nähe des jeweiligen Reflektors 10, 10', 10", ... Der Auslaßkanal 4 kann dabei in zentraler Lage vorgesehen sein.

### BEZUGSZEICHENLISTE

- 1: Durchflußmesser
- 2: Meßkammer
- 3: Einlaßkanal
- 4: Auslaßkanal
- 5: Ultraschallwandl er
- 6: Ultraschallwandler
- 7: Ultraschallsignal
- 8: Strömung
- 9: Strömungswirbel
- 10, 10', 10",...: Reflektoren
- 11: Kammerwand
- 12: Zentrum
- 13: Leitbleche

## Patentansprüche

1. Durchflußmesser (1) für flüssige oder gasförmige Medien mit einer durchströmten Meßkammer (2), mindestens einem Einlaß- (3) und mindestens einem Auslaßkanal (4) sowie mit mindestens einem Ultraschallwandler (5, 6) zum Aussenden bzw. Empfangen von Ultraschallsignalen (7), die die Strömung (8) in der Meßkammer (2) durchsetzen, und einer Auswerteeinrichtung für die Meßsignale der Ultraschallwandler (5, 6),
**dadurch gekennzeichnet, daß**
sich durch entsprechende Anordnung zumindest des Einlaßkanals (3) in der Meßkammer (2) ein Strömungswirbel (9) des zu messenden Mediums ausbildet und mindestens ein Reflektor (10, 10', 10", ...) an der Kammerwand (11) vorgesehen ist, der das Ultraschallsignal (7) in Richtung oder gegen die Richtung des Strömungswirbels (9) durch die Meßkammer (2) leitet.

2. Durchflußmesser nach Anspruch 1,
**dadurch gekennzeichnet, daß**
die Meßkammer (2) zylinderförmig ausgebildet ist.

3. Durchflußmesser nach einem der Ansprüche 1 oder 2,
**dadurch gekennzeichnet, daß**
das Ultraschallsignal (7) mehrfach im Kreis den Strömungswirbel (9) durchsetzt.

4. Durchflußmesser nach einem der vorhergehenden Ansprüche,
**dadurch gekennzeichnet, daß**
das Ultraschallsignal (7) das Zentrum (12) der Meßkammer (2) nicht durchsetzt.

5. Durchflußmesser nach einem der vorhergehenden Ansprüche,
**dadurch gekennzeichnet, daß**
das Zentrum (12) der Meßkammer (2) zur Ein- und/oder Auskopplung des Ultraschallsignals (7) dient.

6. Durchflußmesser nach einem der vorhergehenden Ansprüche,
**dadurch gekennzeichnet, daß**
die Ultraschallwandler (5, 6) im Zentrum (12) der Meßkammer (2) angeordnet sind.

7. Durchflußmesser nach einem der vorhergehenden Ansprüche,
**dadurch gekennzeichnet, daß**
der Einlaß- (3) und/oder Auslaßkanal (4) an die Meßkammer (2) tangential angeordnet sind/ist.

8. Durchflußmesser nach einem der vorhergehenden Ansprüche,
**dadurch gekennzeichnet, daß**
der Einlaßkanal (3) und/oder der Auslaßkanal (4) in etwa den gleichen Durchmesser wie die daran angrenzenden Rohre aufweisen.

9. Durchflußmesser nach einem der vorhergehenden Ansprüche,
**dadurch gekennzeichnet, daß**
zur Leitung der Strömung (8) des Mediums Leitbleche (13) vorgesehen sind.

10. Durchflußmesser nach Anspruch 9,
**dadurch gekennzeichnet, daß**
die Leitbleche (13) im Anschluß an den Einlaßkanal (3) angeordnet sind.

11. Durchflußmesser nach einem der Ansprüche 9 oder 10,
**dadurch gekennzeichnet, daß**
die Leitbleche (13) vor dem Auslaßkanal (4) angeordnet sind.

12. Durchflußmesser nach einem der Ansprüche 9 - 11,
**dadurch gekennzeichnet, daß**
die Leitbleche (13) senkrecht zur Wirbelausrichtung angeordnet sind.

13. Durchflußmesser nach einem der Ansprüche 9 - 12,
**dadurch gekennzeichnet, daß**
die Leitbleche (13) zur Längsachse der Meßkammer (2) geneigt sind.

14. Durchflußmesser nach einem der vorhergehenden Ansprüche,
**dadurch gekennzeichnet, daß**
im Zentrum des Strömungswirbels (9) ein Zylinder vorgesehen ist.

15. Durchflußmesser nach Anspruch 14,
**dadurch gekennzeichnet, daß**
der Zylinder aus ultraschalldämpfendem Material besteht.

16. Durchflußmesser nach einem der vorhergehenden Ansprüche,
**dadurch gekennzeichnet, daß**
die Reflektoren (10, 10', 10", ...) das Ultraschallsignal (7) senkrecht zur Längsachse der Meßkammer (2) leiten.

17. Durchflußmesser nach einem der vorhergehenden Ansprüche,
**dadurch gekennzeichnet, daß**
die Meßkammer (2) symmetrisch aufgebaut ist.

18. Durchflußmesser nach einem der vorhergehenden Ansprüche,
**dadurch gekennzeichnet, daß**
die Reflektoren (10, 10', 10", ...) und/oder die Einlaßkanäle (3) symmetrisch angeordnet sind.

19. Durchflußmesser nach einem der vorhergehenden Ansprüche,
**dadurch gekennzeichnet, daß**
der Auslaßkanal (4) in zentraler Lage vorgesehen ist.

20. Durchflußmesser nach einem der vorhergehenden Ansprüche,
**dadurch gekennzeichnet, daß**
den Teilstrahlen des Ultraschallsignals (7) mindestens ein Einlaßkanal (3) zugeordnet ist.

21. Durchflußmesser nach Anspruch 20,
**dadurch gekennzeichnet, daß**
die Anzahl der Einlaßkanäle (3) gleich oder ein ganzes Vielfaches der Anzahl der Teilstrahlen des Ultraschallsignals (7) ist.

22. Durchflußmesser nach einem der vorhergehenden Ansprüche,
**dadurch gekennzeichnet, daß**
die Einlaßkanäle (3) in gleichem Abstand und Winkel zu den Teilstrahlen des Ultraschallsignals (7) angeordnet sind.

23. Durchflußmesser nach einem der vorhergehenden Ansprüche,
**dadurch gekennzeichnet, daß**
der oder die jeweiligen Einlaßkanäle (3) in der Nähe des Reflektors (10, 10', 10", ...) angeordnet sind.
